# EUROPEAN PATENT SPECIFICATION

(11) **EP 2 543 256 B1**
(45) Date of publication and mention of the grant of the patent: **01.06.2016**
(21) Application number: 11750740.0
(22) Date of filing: 03.03.2011
(51) Int. Cl.: A23F 5/20

(54) **CAFFEINLESS COFFEE**
KOFFEINFREIER KAFFEE
CAFÉ DÉCAFÉINÉ

(30) Priority: 03.03.2010 JP 2010046989
(43) Date of publication of application: 09.01.2013
(73) Proprietor: Suntory Beverage & Food Limited, Chuo-ku, Tokyo 104-0031 (JP)
(72) Inventor: FUJIWARA, Masaru, Kawasaki-shi Kanagawa 211-0067 (JP); ONISHI, Tatsuji, Kawasaki-shi Kanagawa 211-0067 (JP); MITSUHASHI, Morio, Atsugi-shi Kanagawa 243-0213 (JP)
(74) Representative: Vossius & Partner Patentanwälte Rechtsanwälte mbB
(86) International application number: PCT/JP2011/054875
(87) International publication number: WO 2011/108631

(56) References cited:
- EP-A2- 1 359 813
- WO-A1-2005/029969
- WO-A1-2010/038867
- JP-A- 1 124 352
- JP-A- 2 020 249
- JP-A- 2007 508 850
- JP-A- 2009 254 307
- US-A- 4 282 274
- US-A1- 2003 180 431
- OSCAR GONZALEZ-RIOS ET AL.: 'Impact of ''ecological'' post-harvest processing on coffee aroma:II. Roasted coffee' JOURNAL OF FOOD COMPOSITION AND ANALYSIS vol. 20, 2007, pages 297 - 307, XP008156896

## Description

### TECHNICAL FIELD

The present invention relates to caffeineless coffee with rich flavor, more particularly to caffeineless coffee whose flavor, although reduced as the result of caffeine removal, has been brought back to become closer to the inherent flavor of coffee.

### BACKGROUND ART

Coffee usually contains caffeine but because of several reasons associated with caffeine including its tendency to interfere with sleep and its stimulating action on the central nerve, the heart, secretion of gastric juice, and digestion, caffeineless coffee has been developed as a special type of coffee from which caffeine has been removed. However, caffeine is one of the main taste components of coffee and the inherent taste of coffee is weakened if it is removed; in addition, other taste components of coffee (including aroma components) are also removed during the decaffeination step, with the result that the inherent flavor of coffee is impaired. To cope with this problem, various methods have been proposed for improving the flavor of caffeineless coffee.

For example, Patent Document 1 teaches that the drop in taste due to the decaffeination process can be compensated by adding at least one neutral amino acid selected from the group consisting of valine, leucine, and isoleucine. In addition, Patent Document 2 discloses that by adding theanine to caffeineless coffee, the latter's flavor is improved to regain the consumer's preference inherently possessed by coffee.

### CITATION LIST

### PATENT LITERATURE

Patent Document 1: JP 2009-254307 A
Patent Document 2: JP 2004-105003 A

### SUMMARY OF INVENTION

### TECHNICAL PROBLEM

An object of the present invention is to provide caffeineless coffee of rich flavor that has a taste and aroma at least comparable to those of ordinary coffee.

### SOLUTION TO PROBLEM

As a result of the intensive studies they made, the present inventors found accidentally that ethyl isovalerate had an action for enhancing the inherent flavor of coffee. The present inventors then mixed caffeineless coffee beans with coffee beans that had been processed and/or purified to contain ethyl isovalerate, and found that the flavor of caffeineless coffee could be improved and brought closer to the inherent flavor of coffee; the present invention has been accomplished on the basis of these findings.

Thus, the present invention relates to the following.
[1] Caffeineless coffee containing ethyl isovalerate.
[2] The caffeineless coffee as recited in [1], wherein the Caffeineless coffee is in the form of coffee beans and the proportion of ethyl isovalerate is at least 0.1 ppb relative to the total amount of the coffee beans.
[3] The caffeineless coffee as recited in [1] or [2], wherein the ethyl isovalerate has been added in the form of fermented coffee beans.
[4] The caffeineless coffee as recited in [2] or [3], wherein the caffeineless coffee is in the form of green coffee beans and the ethyl isovalerate has been added in the form of fermented green coffee beans.
[5] Roasted caffeineless coffee which is obtained by roasting the caffeineless coffee recited in [4].

### ADVANTAGEOUS EFFECTS OF INVENTION

According to the present invention, caffeineless coffee having a rich taste and aroma can be obtained in a convenient way; this caffeineless coffee is such that its flavor, although reduced as the result of caffeine removal, has been improved and brought closer to the inherent flavor of coffee. In addition, ethyl isovalerate has actions for preventing a decrease in the aroma of roasted coffee beans that is liable to undergo time-dependent changes, as well as masking the oxidation smell if it develops; hence, the caffeineless coffee beans (roasted beans) of the present invention have good storage stability, with the added advantage of suppressing the scattering of aroma during the grinding of the roasted coffee beans before extraction.

### DESCRIPTION OF EMBODIMENTS

The caffeineless coffee of the present invention (which is also called decaffeinated coffee beans) refers to coffee that has been subjected to the decaffeination process and it may take on any form such as beans (green or roasted), extract (including concentrated liquid), or instant coffee (powdered coffee). The flavor of coffee is not regarded so important for instant coffee and canned coffee as for the coffee extracted directly from coffee beans by means of such a device as a paper drip, a siphon or a coffee maker; hence, one of the advantageous modes of the present invention is beans of caffeineless coffee (hereinafter referred to as caffeineless coffee beans.)

### (Caffeineless Coffee Beans)

On the pages that follow, a process for producing caffeineless coffee beans is descried in detail as an advantageous mode of the present invention but the present invention is not limited to it.

Caffeineless coffee beans which are to be enhanced in flavor may be produced by the decaffeination method which involves removing caffeine from the green coffee beans as purified; alternatively, they may be harvested from a caffeineless variety of *Coffea* which is caffeine-free. In view of the ease of production, it is advantageous to use the decaffeination method in which caffeine is selectively extracted from green beans as they are immersed in solvents such as organic solvents, water, or supercritical fluid carbon dioxide. In the present invention, the kind of caffeineless coffee beans is not particularly limited and Arabica, Robusta, and any other species may be used, and the regions of coffee production (e.g., Brazil, Guatemala, Columbia, Honduras, Costa Rica, Tanzania, Kenya, Indonesia, and Vietnam) are not particularly limited, either.

The caffeineless coffee beans of the present invention can be produced by mixing the above-described caffeineless coffee beans with ethyl isovalerate or coffee beans containing ethyl isovalerate. Specific exemplary methods include one in which ethyl isovalerate is spayed or otherwise added to coffee beans during the production of caffeineless coffee beans (as in the decaffeination step) and/or after their production, as well as one in which caffeineless coffee beans are mixed with coffee beans containing ethyl isovalerate.

Ethyl Isovalerate (also designated as butanoic acid 3-methyl-ethyl ester, butyric acid 3-methyl-ethyl ester, or isovaleric acid ethyl ester) is a compound represented by the following formula (I): 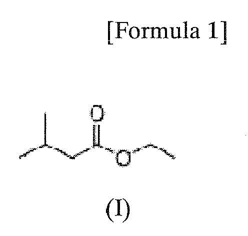 and it is found in fruits such as pineapple, strawberry, and citrus. The ethyl isovalerate to be added may be in the form of an ethyl isovalerate containing plant extract as obtained from the plants containing ethyl isovalerate by any extraction methods including known types; the plant extract may be added as such or, alternatively, the ethyl isovalerate in the extract may be concentrated or purified and the resulting concentrate or pure product may then added to coffee beans. If the fruit extract is directly added to coffee beans, the flavor of the fruit may potentially affect a coffee beverage that is prepared by brewing the roasted coffee beans with boiling water or the like; hence, rather than being used as a fruit extract, ethyl isovalerate is preferably used in the form of a concentrate or purified product or as a synthetic product.

When adding ethyl isovalerate to coffee beans during the production of caffeineless coffee beans (as in the decaffeination step) and/or after their production, the amount of its addition is such that the total amount of coffee beans will contain generally at least 1 ppb, preferably at least 2 ppb, more preferably at least 5 ppb, and most preferably at least 10 ppb, of ethyl isovalerate on a weight basis. The more ethyl isovalerate that is added, the greater the action that is obtained for enhancing the taste and aroma of coffee and, accordingly, there is substantially no upper limit on its addition; nevertheless, from the viewpoint of bringing the taste and aroma of caffeineless coffee closer to those of ordinary coffee which has not been subjected to the decaffeination process, the addition of ethyl isovalerate is generally about 100 ppb or less, preferably about 50 ppb or less, more preferably about 30 ppb or less. To prepare roasted beans of caffeineless coffee, caffeineless coffee beans (green beans) may be roasted after ethyl isovalerate is added to them or, alternatively, caffeineless coffee beans are roasted and ethyl isovalerate is added in such amounts that the concentrations specified above will be attained. The degree of roasting to be performed is such that an L value of about 17-25, preferably about 18-22, will be attained. If the L value attained by roasting is less than 17, cyclic dipeptides and other by-products from roasting may occasionally impair the intended effect of ethyl isovalerate as the active ingredient in the present invention.

The present inventors already confirmed by investigation that ethyl isovalerate, a component usually absent from green coffee beans and roasted coffee beans, was specifically produced by subjecting them to the fermentation process, whereupon green or roasted coffee beans containing ethyl isovalerate could be obtained. The coffee beans subjected to the fermentation process (hereinafter referred to as "fermented coffee beans") are obtained by treating harvested coffee cherries with a certain fermentation-based process that utilizes the function of a microorganism and they are coffee beans (which may be roasted coffee beans) containing ethyl isovalerate at a concentration that can be detected by the following method.

### (Method of Detecting Ethyl Isovalerate in Coffee Beans)

Green coffee beans (5 g) are first milled to a medium grind, to which distilled water (50 mL) is added for steam distillation; the resulting distillate (100 mL) is put into a separating funnel and after adding sodium chloride (25 g) and diethyl ether (50 mL), the separating funnel is shaken for 20 minutes. The diethyl ether layer is recovered and the remaining aqueous layer is put into a separating funnel; after adding diethyl ether (50 mL) again, the separating funnel is shaken for 20 minutes and the diethyl ether layer is recovered. The diethyl ether layer obtained in a total of 100 mL is returned to the separating funnel; after rinsing the separating funnel with distilled water (50 mL), the diethyl ether layer is recovered and sodium sulfate (30 g) is added to effect dehydration; the mixture is concentrated to 1 mL by the KD (Kuderna-Danish) concentration method; the concentrate is introduced into GC-MS for detecting ethyl isovalerate. The GC-MS conditions are as follows.

### <GC-MS conditions>

- Apparatus: 6890N (GC) + 5973inert (MS), product of Agilent
- Column: MACH HP-INNOWAX (10 m*0.20 mm*0.20 µm), product of GERSTEL
- Column temperature: 40°C (3 min) ~ 50°C/min ~ 250°C (10 min)
- Carrier gas: He
- Injection port temperature: 250°C
- Transfer line: 250°C
- Ionization source temperature: 230°C
- Scan parameter: m/z = 35 ~ 350
- SIM parameter : m/z = 70, 88, 102

Fermented coffee beans may be obtained by either one of the following methods:
1) Coffee cherries as harvested are contacted by a microorganism to ferment and then husked (polished) by either the wash or non-wash method.
2) Coffee cherries as harvested are dried either in the sun or by mechanical means and then contacted by a microorganism to ferment and husked (polished) by either the wash or non-wash method.
3) Coffee cherries as harvested are dried in the sun while they are subjected to microbial fermentation and then husked (polished).
4) Coffee cherries as harvested are stripped of the pulp in a depulper and charged into a water tank where they are stripped of the mucilage adhering to the parchment while at the same time they are subjected to microbial fermentation in the presence of added nutritive substances that can be metabolized by the microorganism used and they are then dried either in the sun or by mechanical means and husked.

Contact with a microorganism may be effected either artificially by adding it externally or spontaneously by making use of a microorganism attached to coffee cherries at their surfaces or the like. In the case of artificial contact with a microorganism, exemplary microorganisms that can be used include yeasts such as yeasts for wine fermentation (e.g., strain Lalvin L2323 (Setin Co., Ltd.) and CK S102 strain (BioSpringer), both belonging to the species *Cerevisiae* in the genus *Saccharomyces,* and a yeast of the species *bayanus* in the genus *Saccharomyces*), yeasts for beer fermentation, and baker's yeast; lactic acid bacteria such as those of the genera *Lactobacillus, Pediococcus,* and *Oenococcus;* aspergilli such as ones used to make *sake, shouchu* (Japanese distilled liquor), and *miso* (Japanese fermented soybean paste); and deuteromycetes, or microorganisms belonging to the genus *Geotrichum.* Examples of microorganisms belonging to the genus *Geotrichum* include *Geotrichum candidum, Geotrichum rectangulatum, Geotrichum klebahnii,* and *Geotrichum sp*., with *Geotrichum sp.* SAM2421 (International Deposit Number: FERM BP-10300) [this microorganism was accepted by the International Patent Organism Depositary, the National Institute of Advanced Industrial Science and Technology (Central 6, 1-1-1, Higashi, Tsukuba, Ibaraki, Japan) under date of March 22, 2005] or its variants being particularly advantageous. These microorganisms belonging to the genus *Geotrichum* can be obtained as isolates from coffee cherries.

Contact with a microorganism can be effected either by spraying or dusting coffee cherries with the microorganism or by immersing coffee cherries in a suspension of the microorganism. The fermentation conditions may be chosen as appropriate for the particular microorganism selected.

As mentioned above, microorganisms belonging to the genus *Geotrichum* or *Saccharomyces* can be found on coffee cherries, so instead of performing artificial microbial fermentation as by contact with a microorganism, the functions of such microorganisms belonging to the genus *Geotrichum* or *Saccharomyces* may simply be controlled for fermentation to produce fermented coffee beans.

The regions of coffee cherry production are largely divided into two groups, one being regions such as Yemen and Brazil where the harvest season is dry and there is no need to worry about rain and the other being regions such as Latin America, Africa and Asia where high humidity prolongs the time to dry in the sun. In the first group of regions including Yemen and Brazil, fermented coffee beans can be produced artificially by the above-described methods 1), 2) and 4), preferably method 1) or 2); in the second group of regions including Latin America, Africa and Asia, fermented coffee beans can be produced not only by the artificial means but also by the above-described method 3), where coffee cherries as harvested are dried in the sun while they are fermented with the aid of the microorganism attached to the surfaces of the cherries. Note that to perform "fermentation" in the sense of the term used in the present invention, it is important to control the growth conditions for the above-mentioned microorganisms in such a way as to prevent "rotting'", namely to ensure that no malodor as from sulfides or ammonia will develop. In the case of method 3), to ensure that no rotting will occur, it is important that the coffee cherries to be dried in the sun (i.e., for microbial fermentation) should be protected against rotting by taking a suitable means such as piling up the coffee cherries in a thickness not exceeding a certain level (say, 10 cm or less), laying them out in a thin layer (say, 5 cm or less) immediately after the start of drying and gradually increasing its thickness (say, between 5 and 10 cm) as their water content decreases, or regularly turning the piles of coffee cherries (say, once an hour).

The fermented coffee beans contain not only ethyl isovalerate but also ethyl acetate and/or ethanol and these additional components combine with ethyl isovalerate to enhance the flavor of coffee either additively or synergistically; hence, in a preferred mode of the present invention, ethyl isovalerate is added not on its own but in the form of fermented coffee beans containing ethyl isovalerate.

The caffeineless coffee beans (roasted beans) of the present invention may be obtained either by pre-blending, or roasting green beans of caffeineless coffee as mixed with fermented coffee beans (green beans), or by after-blending in which caffeineless coffee beans and fermented coffee beans are mixed after they are separately roasted. Pre-blending is particularly preferred because it has been confirmed that ethyl isovalerate exhibits a greater flavor enhancing action in pre-blending and that it contributes to the production of caffeineless roasted coffee beans with consistent quality. The flavor enhancing action of ethyl isovalerate is particularly intense when the mixture of the green coffee beans is roasted after storage for a specified period of time. Hence, roasted caffeineless coffee obtained by mixing caffeineless green coffee beans with fermented green coffee beans and then roasting the mixed green beans is one advantageous mode of the present invention. Here the mixing proportion of fermented green coffee beans in the total amount of the mixed green beans is generally about 1-50 wt%, preferably about 3-15 wt%, more preferably about 6-10 wt%. By mixing the fermented green coffee beans within these ranges, the proportion of ethyl isovalerate that is specified for a preferred mode of the present invention (i.e., generally at least 1 ppb, preferably at least 2 ppb, more preferably at least 5 ppb, and most preferably at least 10 ppb, relative to the total amount of coffee beans, with the upper limit being generally about 100 ppb or less, preferably about 50 ppb or less, more preferably about 30 ppb or less) can be realized. The reason for the preferability of pre-blending (mixing the two kinds of green beans before roasting) is not completely clear but most probably, it is more effective than after-blending in protecting the aroma components of coffee that develop in the roasting step to thereby increase the intensity of the aroma of coffee beans. Another possible reason is that holding for a specified time after the pre-blending process may allow ethyl isovalerate to adsorb on the porous coffee beans strongly enough to further enhance its effects (protecting aroma components such as roast aroma and enhancing the flavor of coffee). The term "holding for a specified time after the pre-blending process" as used hereinabove refers to holding within a closed vessel for a period of at least 6 hours, preferably at least 12 hours, more preferably at least 18 hours, and most preferably at least 24 hours. The closed vessel may be a plastic container, an aluminum pouch, and an industrial tank such as a roasting drum (fitted with a lid).

Storing green coffee beans is called aging and some brands are distributed as aged beans. However, aging is known to make the character of coffee beans less distinct and particularly in the case of caffeineless coffee beans, aging is not usually practiced in order to prevent disappearance or decrease of their aroma. In the present invention, fermented green coffee beans are mixed, and brought into contact, with caffeineless green coffee beans, whereby ethyl isovalerate acts in such a way that it "wraps around" the aroma components of the green coffee beans; hence, the above-mentioned holding after the pre-blending process will not reduce the aroma of the green coffee beans but will rather contribute to making the aroma of the roasted beans even more distinct. For these reasons, the time for which caffeineless green coffee beans and fermented green coffee beans are to be kept in contact has substantially no upper limit as long as they are held at a temperature that will not cause accelerated oxidation (10°C or less, preferably 5°C or less). The present inventors roasted the mixture of caffeineless green coffee beans and fermented green coffee beans after storing it in a refrigerator (5°C) for both one month and two months and evaluated their flavor; as it turned out, the roasted mixture of coffee beans had a distinct aroma and flavor that was inherent in the caffeineless coffee beans and gave rise to an extract having an intense aroma and a rich flavor.

Whether the pre-blending or after-blending method is performed, it is preferred to roast the fermented coffee beans in such a manner that an L value, as measured with a color-difference meter and used as an index for the roast level, reads about 16-30, preferably about 18-22. If roasting gives an L value less than 16, the resulting cyclic dipeptides and other substances might impair the efficacy of ethyl isovalerate which is the effective component of the present invention. The L value as used herein provides an index for the roast level. The L value may be measured by the following procedure: 50% of the roasted coffee beans under test are ground to particles sized 0.8-1.2 mm; the amounts of particles sized 0.5 mm and less and particles sized 2 mm and more are each adjusted to no more than 5%; chafe is removed as necessary; the ground beans are charged into a cell, tapped to uniformity, and then subjected to measurement with a spectroscopic colorimeter. A spectroscopic colorimeter that may be used is SE-2000 produced by NIPPON DENSHOKU INDUSTRIES CO., LTD.

The amount of ethyl acetate and/or ethanol which combine with ethyl isovalerate to enhance the flavor of coffee either additively or synergistically may be described as follows relative to the total amount of caffeineless coffee beans (roasted beans): the content of ethyl acetate is at least 3 ppm, preferably at least 5 ppm, and more preferably at least 100 ppm, on a weight basis, and the content of ethanol is at least 10 ppm, preferably at least 30 ppm, and more preferably at least 50 ppm, again on a weight basis.

The values of ethyl acetate and ethanol contents noted above are those obtained by making a compositional analysis of the gas in the headspace of a gas chromatographic (GC) sample tube charged with fermented, roasted whole (yet to be ground) coffee beans. The conditions for GC analysis are as follows.

### (GC analysis conditions)

- Apparatus: Agilent 7694 HeadspaceSampler (product of Agilent Technologies) Agilent 6890 GC System (product of Agilent Technologies)
- Column: HP-INNOWAX (60 mm x 0.25 mm i.d. x 0.25 µm in film thickness)
- Temperature: held at 40°C for 4 min, raised at 3°C/min up to 220°C, and held at 230°C for 30 min
- Detectors: MSD, FID

The present invention is characterized by incorporating ethyl isovalerate into caffeineless coffee. As mentioned earlier, the flavor enhancing action of the present invention is attained by incorporating ethyl isovalerate in such a way that its content in the total amount of coffee beans is at least 1 ppb on a weight basis; hence, fermented coffee beans, whether they are green or roasted, are to be incorporated in such amounts that the proportion of ethyl isovalerate will lie within the above-noted range. The proportion of the fermented coffee beans usually ranges from about 1 to about 10 wt% relative to the total amount of coffee beans.

The caffeineless coffee beans of the present invention can specifically be identified by the fact that a coffee extract having a taste and aroma that are at least comparable to those of yet-to-be-decaffeinated coffee beans can be obtained from roasted coffee beans that have been decaffeinated to such an extent that the caffeine content is no greater than 0.2 wt% (preferably no greater than 0.18 wt%, more preferably no greater than 0.16 wt%) relative to the total amount of coffee beans. Here the caffeine content may be measured by, for example, the HPLC method described in the Example section.

### (Caffeineless Coffee (other than as beans))

An extract form of the caffeineless coffee of the present invention can be obtained by roasting the above-described ethyl isovalerate containing caffeineless coffee beans, grinding them, and subjecting the grind to extraction. Other methods that can be applied include one in which an extract is obtained from the roasted caffeineless coffee beans and adding ethyl isovalerate to the extract, as well as one in which an extract of the roasted caffeineless coffee beans and an extract of fermented, roasted coffee beans are separately obtained and then mixed together.

The proportion of ethyl isovalerate in the extract is such that in the case where the extract is to be drunk as a coffee beverage, ethyl isovalerate is incorporated in the beverage to give a content of 0.1 ppb to 10 ppb, preferably 0.15 ppb to 5 ppb, more preferably 0.2 ppb to 2 ppb, on a weight basis. Calculated for amounts relative to the solids content in the coffee extract, the proportion of ethyl isovalerate is approximately in the range of 5 ppb to 1 ppm, preferably in the range of 10 ppb to 600 ppb, with the solids content of coffee being taken as unity. By adjusting the proportion of ethyl isovalerate to be within these ranges, the intended flavor enhancing action on caffeineless coffee beverages can be attained.

It should be noted here that in the case where the caffeineless coffee of the present invention is instant coffee, ethyl isovalerate may be added at the same proportion as in the extract, which is spray-dried or otherwise processed to produce the intended instant coffee.

### EXAMPLES

On the following pages, the present invention will be explained in greater detail by Examples which are by no means intended to limit the present invention.

### Example 1. Production of Fermented Coffee Beans

Fermented coffee beans were produced by the following steps:
1) a vapor treatment step for treating coffee cherries with vapor at 90-110°C for 15-30 seconds;
2) a step for cooling to 30-40°C;
3) a pH adjustment step for adding adipic acid or lactic acid in an amount of 0.05-0.5 wt% on the basis of the weight of the coffee cherries, thereby adjusting the pH of the outer skins of the coffee cherries to between 3 and 4;
4) a microorganism attaching step for attaching a microorganism for fermentation either simultaneously with or subsequent to the pH adjustment step;
5) a culture step at 30-40°C for 48-72 hours;
6) a drying step for drying the cultured coffee cherries; and
7) a separating/refining step for separating the coffee pulp from the coffee seeds to obtain fermented coffee beans.

To be more specific, 100 kg of fresh coffee cherries were provided and carried on a conveyor capable of speed adjustment and equipped with a tunnel-type vapor introducing section, thereby performing the above step 1) at a temperature of 100°C for a period of 20 seconds. Subsequently, cold air was supplied to quench the coffee cherries to 40°C (step 2)). Fifty grams of dried cells of strain Lalvin EC1128 (*Saccharomyces bayanus*; yeast for wine fermentation) were dissolved in 200 g of water to prepare a yeast solution, which was added together with 100 g of adipic acid to 100 kg of the coffee cherries so that the yeast would be evenly attached to the coffee cherries at a concentration of 1.0 x 10⁶⁻⁷ cells per coffee cherry (steps 3) and 4)). The coffee cherries were left to stand at 35°C for 72 hours to ferment (step 5)) and thereafter dried with a dryer (step 6)), stripped of the pulp with a husker to obtain fermented coffee beans (green beans) (step 7)). Samples of the fermented coffee beans were not ground but each was put as such (assuming their initial shape) into a gas chromatographic (GC) sample tube in an amount of 10 g and the gas in the headspace was analyzed for its components. As it turned out, all samples contained ethyl acetate, ethanol, and ethyl isovalerate.

### Example 2. Production of Caffeineless Coffee Beans (1)

The coffee beans to be treated for flavor enhancement were those of Brazilian Arabica. These green coffee beans had their caffeine content reduced from 1.42% to 0.04% by a water process of decaffeination. The decaffeinated green beans were mixed with the fermented coffee beans (green beans) produced in Example 1 (for their mixing proportions, see Table 1 below) and the mixtures were then fed into a horizontal drum type roaster (supplied with hot air) where they were roasted to a medium to a high roast (L value: 19.5). The resulting roasted coffee beans (caffeineless coffee beans) were subjected to sensory evaluation of aroma and the same roasted coffee beans (as blended) were measured for the contents of ethyl isovalerate and caffeine. The contents of ethyl isovalerate and caffeine were measured by the methods described below.

### (Method of ethyl isovalerate measurement)

Roasted coffee beans were milled to a medium grind, extracted with about 10 masses of boiling water, and filtered to provide an extract. To 50 mL of the resulting extract, 5 drops of silicone were added and the resulting mixture was heated to 60°C; after blowing nitrogen through it, the mixture was adsorbed on an adsorption tube (Tenax GR 35/60) for 20 minutes and thereafter introduced into GC-MS under heating. The conditions for HS, thermal desorption, and GC-MS are indicated below.

### <HS conditions *headspace (purge & trap method)>

- Adsorbent: Tenax-GR 35/60
- Purge gas flow rate: 100 mL/min
- Purge time: 20 min
- Sample load: 50 mL
- Silicone addition: 5 drops of defoamed silicone as diluted 25 folds with distilled water

### <Thermal desorption conditions>

- Apparatus: Thermo Desorption System (TDS), product of GERSTEL

### <GC-MS conditions>

- Apparatus: 6890N (GC) + 5973inert (MS), product of Agilent
- Column: MACH HP-INNOWAX (10 m*0.20 mm*0.20 µm), product of GERSTEL
- Column temperature: 40°C (3 min) ~ 50°C/min ∼ 250°C (10 min)
- Carrier gas: He
- Scan parameter: m/z = 35 ~ 350
- SIM parameter: m/z = 70, 88, 102

### (Method of caffeine measurement)

Roasted coffee beans were milled to a medium grind, extracted with about 10 masses of boiling water, and filtered to provide an extract. The resulting extract was diluted 10 folds (w/w) with Mobile phase A, passed through a membrane filter (Cellulose Acetate of ADVANTEC, 0.45 µm), and injected into HPLC for quantification. The conditions for HPLC measurement are indicated below.

### <Conditions for HPLC measurement>

- Column: TSK-gel ODS-80TsQA (4.6 mmφ x 150 mm; TOSOH CORPORATION)
- Mobile phase A: water/trifluoroacetic acid = 100/0.5
- Mobile phase B: acetonitrile/trifluoroacetic acid = 100/0.5
- Flow rate: 1.0 mL/min
- Column temperature: 40°C
- Gradient conditions:
   100% fluid A retained until 5 min after the start of analysis;
   7.5% fluid B from 5 to 10 min;
   10.5% fluid B from 10 to 20 min;
   10.5% fluid B retained from 20 to 32 min
   26.3% fluid B from 32 to 45 min;
   75.0% fluid B from 45 to 46 min;
   75.0% fluid B retained from 46 to 51 min;
   0% fluid B from 51 to 52 min;
   0% fluid B retained from 52 to 58 min.
- Injection volume: 5.0 MI
- Detection wavelength: caffeine (280 nm)
- Retention time: 19.3 min
- Standard substance: caffeine (anhydrous) (Nacalai tesque)

Coffee extract was prepared from the respective samples of roasted coffee beans and subjected to a cup test. To prepare the coffee extract, coffee beans were charged into a commercial coffee mill (trade name: BONMAC; model number: BM570N) and milled to a medium grind (with the dial on the coffee mill set to MEDIUM); thereafter, 5 g of the coffee particles (powdered coffee) was subjected to extraction with 65 g of boiling water in the usual manner.

The results are shown in Table 1. Compared with the caffeineless coffee containing no ethyl isovalerate (prepared from 100% w/w of unfermented coffee beans), the samples of blended coffee beans containing ethyl isovalerate (i.e., incorporating fermented coffee beans) were characterized in that the taste inherent in coffee (richness and body) and its aroma (coffee flavor) were enhanced as the content of ethyl isovalerate increased. In comparison with the yet-to-be-decaffeinated coffee (ordinary coffee), the samples of blended coffee beans incorporating at least 10 ppb of ethyl isovalerate relative to the entire amount of coffee beans had more intense aroma and produced coffee extract at least comparable to the ordinary coffee in terms of taste and aroma (richness, body, and distinct flavor).

**[Table 1]**

| With decaffeination | Without decaffeination | | Components in blended coffee beans | | Sensory evaluation of beans | Cup test | | |
|---|---|---|---|---|---|---|---|---|
| Unfermented coffee beans (% w/w) | Unfermented coffee beans (% w/w) | Fermented coffee beans (% w/w) | Ethyl isovalerate (ppb w/w) | Caffeine (% wlw) | Aroma of coffee | Richness of coffee | Body of coffee | Distinct coffee flavor |
| 0 | 100 | 0 | 0 | 1.42 | 3.0 | 3.0 | 3.0 | 3.0 |
| 100 | 0 | 0 | 0 | 0.04 | 1.0 | 1.0 | 1.0 | 1.0 |
| 99 | 0 | 1 | 1.6 | 0.05 | 1.5 | 1.2 | 1.2 | 1.5 |
| 98 | 0 | 2 | 3 | 0.07 | 2.0 | 1.5 | 1.5 | 2.0 |
| 96 | 0 | 4 | 8 | 0.09 | 2.5 | 2.0 | 2.0 | 2.5 |
| 94 | 0 | 6 | 10 | 0.13 | 3.5 | 3.0 | 3.0 | 3.5 |
| 92 | 0 | 8 | 13 | 0.17 | 4.0 | 3.5 | 3.5 | 4.0 |
| 90 | 0 | 10 | 16 | 0.19 | 4.5 | 4.0 | 4.0 | 4.5 |

| | | | | | | | | |
|---|---|---|---|---|---|---|---|---|
| [Rating scores] 1 (weak); 2 (rather weak); 3 (moderate as ordinary regular coffee); 4 (rather strong); 5 (strong) | | | | | | | | |

### Example 3. Production of Caffeineless Coffee Beans (2)

Green coffee beans decaffeinated as in Example 2 (i.e., unfermented coffee beans) and green beans subjected to the fermentation process (fermented coffee beans) were mixed in such a way that the ratio of the former to the latter was 94:6 (% w/w). The mixed green beans were held within a closed vessel for a specified period and then fed into a horizontal drum type roaster (supplied with hot air) where they were roasted to a medium to a high roast (L value: 19.5) to prepare a (pre-blend) mixture of roasted beans. The mixed green beans were held at room temperature for 6 hours, 12 hours, 18 hours or 24 hours, or under chilled conditions (5°C) for a month or two months. Unfermented green coffee beans (100% w/w) were also roasted in the same way to a medium to a high roast to prepare caffeineless coffee and with this caffeineless coffee being used as a control, the coffee extracts obtained from the respective samples of roasted coffee beans were subjected to sensory evaluation for the intensity of their coffee flavor. The same evaluation was performed for the other mixed coffee beans (after-blend) prepared from a 94:6 (% w/v) mixture of unfermented coffee beans and fermented coffee beans, both having been roasted by the method the same as that stated above. The coffee extracts were produced by the same method as used in Example 2.

The results are shown in Table 2. Compared with the caffeineless coffee, the samples of blended coffee beans incorporating fermented coffee beans (i.e., caffeineless coffee beans containing ethyl isovalerate) were characterized in that their coffee extracts had an enhanced coffee flavor.

**[Table 2]**

| | Intensity of coffee flavor of coffee extract |
|---|---|
| Control (unfermented coffee beans, 100% w/w) | 1.0 |
| Pre-blend (94:6) (holding time, 0 min) | 2.3 |
| After-blend (94:6) (holding time, 0 min) | 2.1 |
| Pre-blend (94:6) (holding time, 6 hr) | 2.4 |
| Pre-blend (94:6) (holding time, 12 hr) | 2.4 |
| Pre-blend (94:6) (holding time, 18 hr) | 2.4 |
| Pre-blend (94:6) (holding time, 24 hr) | 2.5 |
| Pre-blend (94:6) (holding time, 1 mo) | 2.7 |
| Pre-blend (94:6) (holding time, 2 mo) | 2.7 |

## Claims

1. Caffeineless coffee containing ethyl isovalerate, wherein the caffeineless coffee is in the form of coffee beans and the proportion of ethyl isovalerate is at least 1 ppb relative to the total amount of the coffee beans.

2. The caffeineless coffee as recited in claim 1, wherein the ethyl isovalerate has been added in the form of fermented coffee beans.

3. The caffeineless coffee as recited in claim 2, wherein the caffeineless coffee is in the form of green coffee beans and the mixing proportion of fermented green coffee beans in the total amount of mixed green beans is 1 to 50 wt%.

4. Roasted coffee beans obtainable by
providing caffeineless coffee in the form of caffeineless green coffee beans;
adding fermented green coffee beans comprising ethyl isovalerate; and
roasting the mixture of caffeineless green coffee beans and fermented green coffee beans;
wherein the proportion of ethyl isovalerate is at least 1 ppb relative to the total amount of the coffee beans.

5. The roasted coffee beans as recited in claim 4, wherein the mixing proportion of fermented green coffee beans in the total amount of mixed green beans is 1 to 50 wt%.

6. Roasted coffee beans obtainable by
providing caffeineless coffee in the form of caffeineless green coffee beans;
providing fermented green coffee beans comprising ethyl isovalerate;
separately roasting the caffeineless green coffee beans and fermented green coffee beans;
blending the roasted caffeineless coffee beans and the roasted fermented coffee beans; wherein the proportion of ethyl isovalerate is at least 1 ppb relative to the total amount of the coffee beans.

7. Roasted coffee beans obtainable by
providing caffeineless coffee in the form of caffeineless green coffee beans;
adding ethyl isovalerate to the caffeineless green coffee beans; and
roasting the caffeineless green coffee beans to which ethyl isovalerate has been added; wherein the proportion of ethyl isovalerate is at least 1 ppb relative to the total amount of the coffee beans.

8. Roasted coffee beans obtainable by
providing caffeineless coffee in the form of caffeineless green coffee beans;
roasting the caffeineless green coffee beans; and
adding ethyl isovalerate to the roasted caffeineless coffee beans;
wherein the proportion of ethyl isovalerate is at least 1 ppb relative to the total amount of the coffee beans.

## Patentansprüche

1. Koffeinfreier Kaffee, enthaltend Ethylisovalerat, wobei der koffeinfreie Kaffee in Form von Kaffeebohnen vorliegt und der Anteil an Ethylisovalerat mindestens 1 ppb, bezogen auf die Gesamtmenge der Kaffeebohnen, beträgt.

2. Der koffeinfreie Kaffee gemäß Anspruch 1, wobei das Ethylisovalerat in Form von fermentierten Kaffeebohnen hinzugegeben wurde.

3. Der koffeinfreie Kaffee gemäß Anspruch 2, wobei der koffeinfreie Kaffee in Form von grünen Kaffeebohnen vorliegt und das Mischungsverhältnis der fermentierten grünen Kaffeebohnen in der Gesamtmenge der gemischten grünen Bohnen 1 bis 50 Gew.-% beträgt.

4. Geröstete Kaffeebohnen, erhältlich durch
Bereitstellen von koffeinfreiem Kaffee in Form von koffeinfreien grünen Kaffeebohnen;
Hinzufügen von fermentierten grünen Kaffeebohnen, umfassend Ethylisovalerat; und
Rösten des Gemisches aus koffeinfreien grünen Kaffeebohnen und fermentierten grünen Kaffeebohnen;
wobei der Anteil an Ethylisovalerat mindestens 1 ppb, bezogen auf die Gesamtmenge der Kaffeebohnen, beträgt.

5. Die gerösteten Kaffeebohnen gemäß Anspruch 4, wobei das Mischungsverhältnis der fermentierten grünen Kaffeebohnen in der Gesamtmenge der gemischten grünen Bohnen 1 bis 50 Gew.-% beträgt.

6. Geröstete Kaffeebohnen, erhältlich durch
Bereitstellen von koffeinfreiem Kaffee in Form von koffeinfreien grünen Kaffeebohnen;
Bereitstellen von fermentierten grünen Kaffeebohnen, umfassend Ethylisovalerat;
getrenntes Rösten der koffeinfreien grünen Kaffeebohnen und fermentierten grünen Kaffeebohnen;
Mischen der gerösteten koffeinfreien Kaffeebohnen und der gerösteten fermentierten Kaffeebohnen;
wobei der Anteil an Ethylisovalerat mindestens 1 ppb, bezogen auf die Gesamtmenge der Kaffeebohnen, beträgt.

7. Geröstete Kaffeebohnen, erhältlich durch
Bereitstellen von koffeinfreiem Kaffee in Form von koffeinfreien grünen Kaffeebohnen; Hinzufügen von Ethylisovalerat zu den koffeinfreien grünen Kaffeebohnen; und
Rösten der koffeinfreien grünen Kaffeebohnen, zu denen Ethylisovalerat hinzugefügt wurde;
wobei der Anteil an Ethylisovalerat mindestens 1 ppb, bezogen auf die Gesamtmenge der Kaffeebohnen, beträgt.

8. Geröstete Kaffeebohnen, erhältlich durch
Bereitstellen von koffeinfreiem Kaffee in Form von koffeinfreien grünen Kaffeebohnen;
Rösten der koffeinfreien grünen Kaffeebohnen; und
Hinzufügen von Ethylisovalerat zu den gerösteten koffeinfreien Kaffeebohnen;
wobei der Anteil an Ethylisovalerat mindestens 1 ppb, bezogen auf die Gesamtmenge der Kaffeebohnen, beträgt.

## Revendications

1. Café décaféiné contenant de l'isovalérate d'éthyle, dans lequel le café décaféiné se présente sous la forme de grains de café, et la proportion d'isovalérate d'éthyle est au moins égale à 1 partie par milliard par rapport à la quantité totale de grains de café.

2. Café décaféiné selon la revendication 1, dans lequel l'isovalérate d'éthyle a été ajouté sous la forme de grains de café fermentés.

3. Café décaféiné selon la revendication 2, dans lequel le café décaféiné se présente sous la forme de grains de café verts, et la proportion du mélange de grains de café verts fermentés par rapport à la quantité totale de grains verts mélangés, se situe dans une plage comprise entre 1 % en poids et 50 % en poids.

4. Grains de café torréfiés qu'il est possible d'obtenir selon les étapes consistant à :
fournir du café décaféiné sous la forme de grains de café verts décaféinés ;
ajouter des grains de café verts fermentés qui comprennent de l'isovalérate d'éthyle ; et
torréfier le mélange de grains de café verts décaféinés et de grains de café verts fermentés ;
dans lequel la proportion d'isovalérate d'éthyle est au moins égale à 1 partie par milliard par rapport à la quantité totale de grains de café.

5. Grains de café torréfiés selon la revendication 4, dans lesquels la proportion du mélange de grains de café verts fermentés par rapport à la quantité totale de grains verts mélangés, se situe dans une plage comprise entre 1 % en poids et 50 % en poids.

6. Grains de café torréfié qu'il est possible d'obtenir selon les étapes consistant à :
fournir du café décaféiné sous la forme de grains de café verts décaféinés ;
fournir des grains de café verts fermentés qui comprennent de l'isovalérate d'éthyle ;
torréfier de manière séparée les grains de café verts décaféinés et les grains de café verts fermentés ;
mélanger les grains de café décaféinés torréfiés et les grains de café fermentés torréfiés ;
dans, lesquels la proportion d'isovalérate d'éthyle est au moins égale à 1 partie par milliard par rapport à la quantité totale de grains de café.

7. Grains de café torréfié qu'il est possible d'obtenir selon les étapes consistant à :
fournir du café décaféiné sous la forme de grains de café verts décaféinés ;
ajouter de l'isovalérate d'éthyle aux grains de café verts décaféinés ; et
torréfier les grains de café verts décaféinés auxquels a été ajouté de l'isovalérate d'éthyle ;
dans lesquels la proportion d'isovalérate d'éthyle est au moins égale à 1 partie par milliard par rapport à la quantité totale de grains de café.

8. Grains de café torréfié qu'il est possible d'obtenir selon les étapes consistant à :
fournir du café décaféiné sous la forme de grains de café verts décaféinés ;
torréfier les grains de café verts décaféinés ; et
ajouter de l'isovalérate d'éthyle aux grains de café décaféinés torréfiés ;
dans lesquels la proportion d'isovalérate d'éthyle est au moins égale à 1 partie par milliard par rapport à la quantité totale de grains de café.
